# EUROPÄISCHE PATENTSCHRIFT

(11) **EP 0 793 732 B1**
(45) Veröffentlichungstag und Bekanntmachung des Hinweises auf die Patenterteilung: **15.09.1999**
(21) Anmeldenummer: 95938300.1
(22) Anmeldetag: 30.11.1995
(51) Int. Cl.: C21C 5/52, F27D 3/08, H05B 7/11, F27B 3/08

(54) **GLEICHSTROM-LICHTBOGENOFEN MIT ZWEI ODER MEHR ELEKTRODEN**
DIRECT CURRENT ARC FURNACE WITH TWO OR MORE ELECTRODES
FOUR A ARC DIRECT A COURANT CONTINU AVEC DEUX OU PLUSIEURS ELECTRODES

(30) Priorität: 02.12.1994 AT 224894
(43) Veröffentlichungstag der Anmeldung: 10.09.1997
(73) Patentinhaber: VOEST-ALPINE INDUSTRIEANLAGENBAU GMBH, 4020 Linz (AT)
(72) Erfinder: AIGNER, Bernhard, NR. 59 (AT); BERGER, Harald, A-4020 Linz (AT); MITTAG, Peter, A-4030 Linz (AT)
(74) Vertreter: Kopecky, Helmut, Dipl.-Ing. Kopecky & Schwarz Patentanwälte
(86) Internationale Anmeldenummer: AT9500236
(87) Internationale Veröffentlichungsnummer: WO9617091

(56) Entgegenhaltungen:
- EP-A- 0 023 058
- EP-A- 0 657 710
- AU-A- 6 512 694
- US-A- 3 949 151
- US-A- 5 204 873
- STAHL UND EISEN Bd. 114, Nr. 5, 16 Mai 1994, XP000448184 KÖHLE S 'GEGENÜBERSTELLUNG VON GLEICHSTROM- UND DREHSTROM-LICHTBOGENOFEN COMPARISON OF DIRECT-CURRENT AND THREE-PHASE A.C. ARC FURNACES'

## Beschreibung

Die Erfindung betrifft einen Gleichstrom-Lichtbogenofen für metallurgische Zwecke, mit zwei oder mehreren am Ofengefäß angeordneten und in das Ofengefäß ragenden Elektroden, wobei für jede der Elektroden jeweils eigene elektrische Versorgungseinrichtungen, zumindest Gleichrichterstationen und Hochstrom-Leitungen, vorgesehen sind.

Ein Gleichstrom-Lichtbogenofen dieser Art ist beispielsweise aus der US-A - 3,949,151 bekannt. Dieser Ofen weist drei im Grundriß des Ofens gesehen radialsymmetrisch angeordnete, senkrecht in das Ofengefäß ragende Elektroden auf, wobei die elektrischen Versorgungseinrichtungen zur Speisung dieser Elektroden an einer Seite des Ofens zusammengefaßt angeordnet sind. Jede der Elektroden wird von einem eigenen Gleichrichter mit Strom versorgt, wobei die Hochstrom-Leitungen ausgehend von den an einer Seite des Ofens angeordneten Gleichrichterstationen um den Ofen herum zu den jeweils zu versorgenden Elektroden geführt sind.

Die Hochstrom-Leitungen sind von starken elektrischen Feldern umgeben, die zu Lichtbogenablenkungen der zwischen den Elektrodenspitzen und der Metallschmelze brennenden Lichtbogen führen. Dies führt nicht nur zu einem stark ungleichmäßigen Abbrand der Elektroden, sondern auch zu einer starken thermischen Mehrbelastung der Ausmauerung des Ofengefäßes. Zur Vermeidung solcher Erscheinungen sind gemäß der US-A - 3,949,151 sechs Anoden im Boden des Gleichstrom-Lichtbogenofens vorgesehen, die über einen eigenen Schaltmechanismus mit den von oben in den Ofen ragenden Elektroden verbunden sind. Diese bekannte Elektrodenanordnung und deren spezielle Schaltung ist konstruktiv und schaltungstechnisch aufwendig und bewirkt u.a., daß der Ofen wie ein Wechselstrom-Ofen arbeitet.

In der AU-A-65126/94 ist ebenfalls ein Gleichstromlichtbogenofen mit jeweils einer eigenen elektrischen Versorgungseinrichtung für zwei in das Ofengefäß senkrecht ragende Elektroden beschrieben. Die Elektroden sind hierbei so angordnet, daß der jeweils einer Elektrode zugehörige Lichtbogen in Richtung Ofenmitte abgelenkt wird, so daß die Ofenausmauerung nicht übermäßig belastet wird.

Die Erfindung bezweckt die Vermeidung der oben genannten Nachteile und Schwierigkeiten und stellt sich die Aufgabe, bei einem Gleichstrom-Lichtbogenofen der eingangs beschriebenen Art mit mehreren Elektroden Lichtbogenablenkungen, die durch Krafteinwirkungen der von den zu den Elektroden geführten Strömen herrührenden Magnetfelder entstehen, zu vermeiden.

Die Lichtbögen sollen über die gesamte Betriebszeit des Ofens gleichmäßig und in eine exakt vorbestimmbare Richtung brennen, so daß thermische Unsymmetrie im Gleichstrom-Lichtbogenofen und damit ein erhöhter Verschleiß von Ausmauerung des Ofengefäßes vermieden wird.

Diese Aufgabe wird erfindungsgemäß dadurch gelöst, daß die für jede der Elektroden vorgesehenen elektrischen Versorgungseinrichtungen, wie Gleichrichterstationen und Hochstrom-Leitungen, jeweils im unmittelbaren Nahbereich der zu versorgenden Elektrode angeordnet sind, wobei die elektrischen Versorgungseinrichtungen einer Elektrode von den elektrischen Versorgungseinrichtungen der übrigen Elektroden in Umfangsrichtung des Ofengefäßes räumlich getrennt vorgesehen sind, und daß die Elektroden in zur Horizontalrichtung geneigter Richtung angeordnet sind.

Die Anordnung der elektrischen Versorgungseinrichtungen, wie von Gleichrichterdrosseln etc., jeweils im unmittelbaren Nahbereich jeder der Elektroden minimiert eine einseitige unsymmetrische gegenseitige Beeinflussung der Elektroden, zumal dann die Hochstrom-Leitungen unmittelbar und auf kurzem Wege zu den Versorgungseinrichtungen führen.

Gemäß einer bevorzugten Ausführungsform ist die zu einer Elektrode geführte Hochstrom-Leitung - im Grundriß des Gleichstrom-Lichtbogenofens gesehen - in bezug auf die vertikale Ofenmittelachse in etwa radialer Richtung bis zu einer dieser Elektrode zugeordneten Gleichrichterstation verlaufend angeordnet.

Vorzugsweise sind die Elektroden und die Hochstrom-Leitungen etwa radialsymmetrisch angeordnet. Hierdurch lassen sich einseitige, unsymmetrisch auf die Lichtbögen der Elektroden wirkende Kräfte der Magnetfelder gänzlich vermeiden.

Hierbei ist zweckmäßig jeder Elektrode eine eigene Gleichrichterstation zugeordnet, die - im Grundriß des Gleichstrom-Lichtbogenofens gesehen - jeweils in einem Bereich in radialer Verlängerung der Elektrode angeordnet ist.

Zur Erzielung von Einsparungen an den elektrischen Versorgungseinrichtungen ist gemäß einer bevorzugten Ausführungsform jeder Elektrode eine eigene Gleichrichterstation zugeordnet und sind jeweils mindestens zwei Gleichrichterstationen gemeinsam an eine Trafostation angeschlossen.

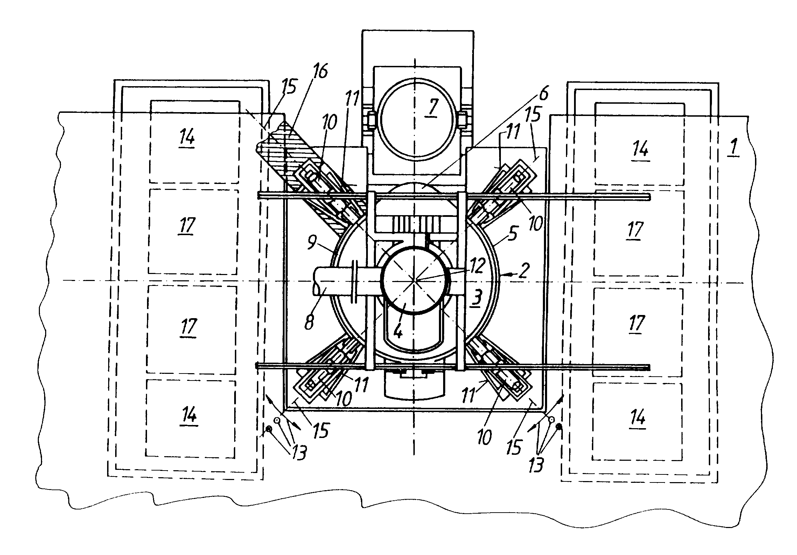

Die Erfindung ist nachfolgend anhand eines in der Zeichnung dargestellten Ausführungsbeispieles näher erläutert, wobei die Zeichnung einen Gleichstrom-Lichtbogenofen im Grundriß in schematischer Darstellung veranschaulicht.

Mit 1 ist eine Ofenbühne bezeichnet, in der ein Gleichstrom-Lichtbogenofen 2 zur Erzeugung von Stahl eingesetzt ist. Dieser Elektro-Lichtbogenofen 2 weist einen zentralen, vertikal vom Ofendeckel 3 aufragenden Chargierschacht 4 auf, der hinsichtlich seines Durchmessers gegenüber dem Durchmesser des Ofengefäßes 5 verringert ist.

Das Ofengefäß 5 weist einen Erker 6 auf, der in üblicher Weise mit einem Bodenabstich versehen ist, über den die Schmelze in eine unter das Ofengefäß 5 bringbare Pfanne 7 fließen kann. Eine Gasabsaugung 8 ist an den Chargierschacht 4 angeschlossen.

In das Ofengefäß 5 ragen in zur Horizontalebene geneigter Richtung von der Seite her, d.h. durch dessen vertikale Seitenwand 9, vier Graphitelektroden 10, die jeweils an Elektroden-Trageinrichtungen 11 abgestützt und mit deren Hilfe in Richtung ihrer Längsachse bewegbar und in einem geringen Ausmaß um die Elektrodenspitzen oder um das Zentrum 12 des Ofens schwenkbar sind, u.zw. vorzugsweise sowohl in horizontaler als auch in vertikaler Richtung, wie dies durch die Doppelpfeile 13 veranschaulicht ist. Jeder dieser Elektroden 10 ist eine eigene Gleichrichterstation 14 zugeordnet, mit der die Elektrode 10 jeweils über eine Hochstrom-Leitung 15 verbunden ist und die jeweils im unmittelbaren Nahbereich der Elektrode 10 angeordnet ist. Auf diese Art und Weise gelingt es, mit kurzen Hochstrom-Leitungen 15 die Elektroden 10 mit den Gleichrichterstationen 14 zu verbinden. Die Hochstrom-Leitungen 15 verlaufen - im Grundriß gesehen - jeweils etwa in Verlängerung der Elektroden 10. Dies gilt insbesondere dann, wenn die Elektroden 10 sich in Mittelstellung ihres Schwenkbereiches befinden.

Wie aus der Zeichnung zu ersehen ist, sind sowohl die Elektroden 10 als auch die Hochstrom-Leitungen 15 - im Grundriß gesehen - radialsymmetrisch angeordnet. Geringe Abweichungen der radialsymmetrischen Anordnung sowohl der Elektroden 10 als auch der Hochstrom-Leitungen 15 sind zulässig und ergeben sich schon aus der Möglichkeit, die Elektroden in horizontaler Richtung zu verschwenken. Beispielsweise wäre eine Anordnung der Hochstrom-Leitungen 15 im schraffierten Bereich 16 ohne wesentlichen Einfluß auf die Lichtbögen der benachbarten Elektroden 10.

Gemäß dem in der Zeichnung dargestellten Ausführungsbeispiel ist jeder Gleichrichterstation 14 eine eigene Trafostation 17 zugeordnet, wobei sowohl die Gleichrichterstationen 14 als auch die Trafostationen 17 unterhalb der Ofenbühne 1 und damit niveaumäßig unterhalb des Ofengefäßes 5 angeordnet sind. Es könnte auch eine einzige Trafostation 17 zur Versorgung zweier benachbart angeordneter Gleichrichterstationen 14 dienen.

Die Erfindung beschränkt sich nicht auf das in der Zeichnung dargestellte Ausführungsbeispiel, sondern kann in verschiedener Hinsicht modifiziert werden. Beispielsweise ist es möglich, den Gleichstrom-Lichtbogenofen 2 auch mit drei, sechs oder acht Elektroden 10 zu bestücken. In diesen Fällen ist darauf zu achten, daß die Hochstrom-Leitungen 15 - bei radialsymmetrischer Anordnung der Elektroden 10 - ebenfalls - im Grundriß gesehen - in etwa radialer Richtung von den Elektroden 10 zu den entsprechenden Gleichrichterstationen 14 geführt sind. Die Erfindung läßt sich auch für Gleichstrom-Lichtbogenöfen mit durch den Ofendeckel 3 ragenden Elektroden anwenden.

## Patentansprüche

1. Gleichstrom-Lichtbogenofen (2) für metallurgische Zwecke, mit zwei oder mehreren am Ofengefäß (5) angeordneten und in das Ofengefäß (5) ragenden Elektroden (10), wobei für jede der Elektroden (10) jeweils eigene elektrische Versorgungseinrichtungen, wie Gleichrichterstationen (14) und Hochstrom-Leitungen (15), vorgesehen sind, dadurch gekennzeichnet, daß die für jede der Elektroden (10) vorgesehene eigene Gleichrichterstation (14) und Hochstrom - Leitung (15) jeweils im unmittelbaren Nahbereich der zu versorgenden Elektrode (10) angeordnet sind, wobei die elektrischen Versorgungseinrichtungen (14, 15) einer Elektrode (10) von den elektrischen Versorgungseinrichtungen (14, 15) der übrigen Elektroden (10) in Umfangsrichtung des Ofengefäßes (5) räumlich getrennt vorgesehen sind, und daß die Elektroden (10) in zur Horizontalrichtung geneigter Richtung angeordnet sind.

2. Gleichstrom-Lichtbogenofen nach Anspruch 1, dadurch gekennzeichnet, daß die zu einer Elektrode (10) geführte Hochstrom-Leitung (15) - im Grundriß des Gleichstrom-Lichtbogenofens (2) gesehen - in bezug auf die vertikale Ofenmittelachse (12) in etwa radialer Richtung bis zu einer dieser Elektrode (10) zugeordneten Gleichrichterstation (14) verlaufend angeordnet ist.

3. Gleichstrom-Lichtbogenofen nach Anspruch 2, dadurch gekennzeichnet, daß die Elektroden (10) und die Hochstrom-Leitungen (15) etwa radialsymmetrisch angeordnet sind.

4. Gleichstrom-Lichtbogenofen nach Anspruch 2 oder 3, dadurch gekennzeichnet, daß jeder Elektrode (10) eine eigene Gleichrichterstation (14) zugeordnet ist, die - im Grundriß des Gleichstrom-Lichtbogenofens (2) gesehen - jeweils in einem Bereich in radialer Verlängerung der Elektrode (10) angeordnet ist.

5. Gleichstrom-Lichtbogenofen nach Anspruch 4, dadurch gekennzeichnet, daß jeder Elektrode (10) eine eigene Gleichrichterstation (14) zugeordnet ist und jeweils mindestens zwei Gleichrichterstationen (14) gemeinsam an eine Trafostation (17) angeschlossen sind.

## Claims

1. A d.c. arc furnace (2) for metallurgical purposes, comprising two or more electrodes (10) arranged at the furnace vessel (5) and projecting into the furnace vessel (5), wherein separate electric supply means such as rectifier stations (14) and high current lines (15) are respectively provided for each of the electrodes (10), characterized in that the separate rectifier station (14) and high current line (15) provided for each of the electrodes (10) are respectively arranged in the immediate vicinity of the electrode (10) to be supplied, wherein the electric supply means (14, 15) of one electrode (10) are spacially separated from the electric supply means (14, 15) of the remaining electrodes (10), viewed in the peripheral direction of the furnace vessel (5), and that the electrodes (10) are arranged in a direction inclined relative to the horizontal plane.

2. A d.c. arc furnace according to claim 1, characterized in that the high current line (15) conducted to one electrode (10) - viewed in the ground section of the d.c. arc furnace (2) - is arranged so as to extend in an approximately radial direction relative to the vertical central axis (12) of the furnace as far as to a rectifier station (14) associated with this electrode (10).

3. A d.c. arc furnace according to claim 2, characterized in that the electrodes (10) and the high current lines (15) are arranged in an approximately radially symmetrical manner.

4. A d.c. arc furnace according to claim 2 or 3, characterized in that each electrode (10) is associated with its own rectifier station (14), which - viewed in the ground section of the d.c. arc furnace (2) - is each arranged in a region in the radial extension of the electrode (10).

5. A d.c. arc furnace according to claim 4, characterized in that each electrode (10) is associated with its own rectifier station (14), at least two rectifier stations (14) each being jointly connected to a transformer station (17).

## Revendications

1. Four à arc direct à courant continu (2) destiné à la métallurgique, comprenant deux ou plusieurs électrodes (10) disposées sur la carcasse (5) du four et faisant saillie dans la carcasse (5) du four, chacune des électrodes (10) disposant respectivement de ses propres dispositifs d'alimentation électrique comme des postes de redressement (14) et des conduites de courant élevé (15), caractérisé en ce que les postes de redressement (14) et les conduites de courant élevé (15) prévus en propre pour chacune des électrodes (10) sont disposés respectivement à proximité directe de l'électrode (10) à alimenter, les dispositifs d'alimentation électrique (14, 15) d'une électrode (10) étant agencés spatialement séparés des dispositifs d'alimentation électrique (14, 15) des autres électrodes dans le sens périphérique de la carcasse (5) du four, et en ce que les électrodes (10) sont disposées dans un sens tendant vers l'horizontale.

2. Four à arc direct à courant continu selon la revendication 1, caractérisé en ce que la conduite de courant élevé (15) menant à une électrode (10) - vue dans le plan du four à arc direct à courant continu (2) - est disposée par rapport à l'axe central (12) vertical du four de manière à s'étendre dans un sens sensiblement radial jusqu'à un poste de redressement (14) coordonné à une de ces électrodes (10).

3. Four à arc direct à courant continu selon la revendication 2, caractérisé en ce que les électrodes (10) et les conduites de courant élevé (15) sont disposées de manière sensiblement symétrique dans le sens radial.

4. Four à arc direct à courant continu selon la revendication 2 ou 3, caractérisé en ce qu'à chaque électrode (10) est coordonné son propre poste de redressement (14) qui - vu dans le plan du four à arc direct à courant continu (2) - est disposé chaque fois dans une zone dans le prolongement radial de l'électrode (10).

5. Four à arc direct à courant continu selon la revendication 4, caractérisé en ce qu'à chaque électrode est coordonné son propre poste de redressement (14) et au moins deux postes de redressement sont raccordés respectivement et conjointement à un poste transformateur (17).
